# EUROPEAN PATENT APPLICATION

(11) **EP 1 903 006 A1**
(43) Date of publication of application: **26.03.2008**
(21) Application number: 06019823.1
(22) Date of filing: 22.09.2006
(51) Int. Cl.: C01B 33/033, C01B 33/037

(54) **Process for the production of Si by reduction of SiHCI3 with liquid Zn**

(71) Applicant: Umicore, 1000 Brussels (BE)
(72) Inventor: Robert Eric, 2250 Olen (BE); Zijlema Tjakko, 2250 Olen (BE)
(74) Representative: Umicore RDI Patent Department

(57) **Abstract**

The invention relates to the manufacture of high purity silicon as a base material for the production of e.g. crystalline silicon solar cells.

SiHCl₃ is converted to Si metal by contacting gaseous SiHCl₃ with liquid Zn, thereby obtaining a Si-bearing alloy, H₂ and ZnCl₂, which are separated. The Si-bearing alloy is then purified at a temperature above the boiling point of Zn.

This process does not require complicated technologies and preserves the high purity of the SiHCl₃ towards the end product. The only other reactant is Zn, which can be obtained in very high purity grades, and which can be recycled after electrolysis of the Zn-chloride.

## Description

The invention relates to the manufacture of solar grade silicon as a feedstock material for the manufacture of crystalline silicon solar cells. The Si metal is obtained by direct reduction of SiHCl₃, a precursor that is commonly available in high purity grades.

Silicon suitable for application in solar cells is commonly manufactured by the thermal decomposition of SiHCl₃ according to the Siemens process or its variants. The process delivers very pure silicon, but it is slow, highly energy consuming, and requires large investments.

An alternative route towards the formation of Si for solar cells is the reduction of SiHCl₃ with metals such as Zn. This process has the potential for significant cost reduction because of lower investment costs and reduced energy consumption. It is a variation on the reduction of SiCl₄ with Zn.

The direct reduction of SiCl₄ by Zn in the vapour phase is described in US 2,773,745, US 2,804,377, US 2,909,411 or US 3,041,145. When Zn vapour is used, a granular silicon product is formed in a fluidised bed type of reactor, enabling casier Si separation. However, an industrial process based on this principle is technologically complex.

The direct reduction of SiCl₄ with liquid Zn is described in JP 11-092130 and JP 11-011925. Si is formed as a fine powder and separated from the liquid Zn by entraining it with the gaseous ZnCl₂ by-product. This process is however not practical because the selection of operating conditions leading to the entrainment of a major part of the Si with the gaseous flux appears to be critical. Also, the subsequent separation of the fine Si powder from the ZnCl₂ is problematic as well as the handling and melting of the fine Si powder. The ZnCl₂ has moreover to be vaporized twice, leading to a poor global energetic efficiency of the process.

It is an object of the present invention to provide a solution for the problems in the prior art.

To this end, according to this invention, high purity Si metal is obtained by a process for converting SiHCl₃ into Si metal, comprising the steps of:
- contacting gaseous SiHCl₃ with a liquid metal phase containing Zn, thereby obtaining a Si-bearing metal phase, ZnCl₂ and H₂;
- separating the ZnCl₂ from the Si-bearing metal phase; and
- purifying the Si-bearing metal phase at a temperature above the boiling point of Zn, thereby vaporising Zn and obtaining Si metal,

Using SiHCl₃ instead of e.g. SiCl₄ allows relying on the well proven first steps of the classic Siemens process. The invented process could also be useful to increase the capacity of an existing plant in an economic way .

The contacting and the separating steps are performed in a single reactor. This is rendered possible by the fact that a major part (more than 50% by weight) of the formed Si is retained in the liquid metal phase.

It is useful to combine the contacting and the separating steps, by operating the contacting step at a temperature above the boiling point of ZnCl₂, which evaporates. The ZnCl₂ can be permitted to escape so as to be collected for further processing.

The Si-bearing metal phase as obtained in the contacting step can advantageously contain, besides Si as solute, also at least some Si in the solid state, e.g. as suspended particles. Formation of particular Si may indeed occur during the contacting step, when the Zn metal gets saturated in Si. Solid state Si can also be obtained by cooling the Si-bearing metal phase as obtained in the contacting step, preferably to a temperature of between 420 and 600 °C. The solid state Si can preferably be separated from the bulk of the molten phase, e.g. after settling. This Si metal phase is however still impregnated with Zn and has to be further processed in the purification step.

It is advantageous to perform the contacting step by injecting SiHCl₃ into a bath comprising molten Zn at a flow rate adapted to limit the loss of Si by entrainment with evaporating ZnCl₂, to less than 15% (weight). To this end, a flow rate of SiHCl₃ below 0.8 kg/min per m² of bath surface is suitable. Much higher rates, up to 10 kg/min per m² of bath surface but preferably limited to 2 kg/min per m², are however compatible with the abovementioned low Si losses, if the gaseous SiHCl₃ is dispersed in the bath. Adequate dispersion can be obtained using e.g. multiple submerged nozzles, a submerged nozzle equipped with a porous plug, a rotating gas injector, or any combination of these means. The SiHCl₃ can be injected along with a carrier gas such as N₂.

It is useful to operate the purification step at a temperature above the melting point of Si, and, in particular, at reduced pressure or under vacuum. The purification can advantageously be performed in again the same reactor as the first two process steps.

It is also advantageous to recycle one or more of the different streams which arc not considered as end-products.

The obtained ZnCl₂ can be subjected to molten salt electrolysis, thereby recovering Zn, which can be recycled to the SiHCl₃ contacting step, and Cl₂, which can be recycled as HCl to a process of hydrochlorination of impure Si, thereby generating SiHCl₃. The H₂ needed for the production of HCl is generated in the contacting step and in the hydrochlorination process. Said impure Si could be metallurgical grade Si or any other suitable precursor such as ferrosilicon.

Any Zn that is vaporised in the purification step can be condensed and recycled to the SiHCl₃ contacting step. Similarly, any SiHCl₃ that exits the contacting step un-reacted can be recycled to the SiHCl₃ contacting step, e.g. after condensation.

According to this invention, SiHCl₃ is reduced with liquid Zn. The technology for this process is therefore much more straightforward than that required for the gaseous reduction process. A Si-bearing alloy containing both dissolved and solid Si can be obtained, while the chlorinated Zn either forms a separate liquid phase, containing most of the solid Si, or is formed as a vapour. Zn can be retrieved from its chloride, e.g. by molten salt electrolysis, and reused for SiTiCl₃ reduction. The Si-bearing alloy can be purified at high temperatures, above the boiling points of both Zn and ZnCh, but below the boiling point of Si itself (2355 °C). The evaporated Zn can be retrieved and reused for SiHCl₃ reduction. Any other volatile element is also removed in this step. It is thus possible to close the loop on Zn, thereby avoiding the introduction of impurities into the system through fresh additions.

It should be noted that besides Zn, another metal could also be used that forms chlorides more stable than SiHCl₃, that can be separated from Si easily and that can be recovered from its chloride without difficulty.

In a preferred embodiment according to the invention, gaseous SiHCl₃ is contacted with liquid Zn at atmospheric pressure, at a temperature above the boiling point of ZnCl₂ (732°C) and below the boiling point ofZn (907 °C). The preferred operating temperature is 750 to 880 °C, a range ensuring sufficiently high reaction kinetics, while the evaporation of metallic Zn remains limited.

In a typical embodiment, the molten Zn is placed in a reactor, preferably made of quartz or of another high purity material such as graphite. The SiHCl₃, which is liquid at room temperature, is injected in the zinc via a submerged tube. The injection is performed at the bottom of the Zn-containing vessel. The SiHCl₃, which is heated in the tube, is actually injected as a gas. The end of the injection tube is provided with a dispersion device such as a porous plug or fritted glass. It is indeed important to have a good contact between the SiHCl₃ and the Zn to get a high reduction yield. If this is not the case, partial reduction could occur, or SiHCl₃ could leave the zinc un-reacted. With an adequate SiHCl₃-Zn contact, close to 100% conversion is observed. Finely dispersing the SiHCl₃ has been demonstrated to be a major factor in limiting the entrainment of finely dispersed Si with the gaseous flow.

The reduction process produces H₂ and ZnCl₂. ZnCl₂ has a boiling point of 732 °C, and is gaseous at the preferred operating temperature. It leaves the Zn-containing vessel via the top, together with H₂ and unteacted SiHCl₃. The vapours are condensed and collected in a separate recipient.

The process also produces Si. The Si dissolves in the molten Zn up to its solubility limit. The Si solubility in the Zn increases with temperature and is limited to about 4% at 907 °C, the atmospheric boiling point of pure Zn.

In a first advantageous embodiment of the invention, the amount of SiHCl₃ injected is such that the solubility limit of Si in Zn is exceeded. Solid, particulate Si is produced, which may remain in suspension in the molten Zn bath and/or aggregate so as to form dross. This results in a Zn metal phase with a total (dissolved, suspended and drossed) mean Si concentration of preferably more than 10%, i.e. considerably higher than the solubility limit, and thus in a more efficient and economic Si purification step. Any particulate Si is however subject to losses by entrainment with the ZnCl₂ gaseous stream. This risk can be minimised by using a sufficiently low SiHCl₃ flow rate and/or by ensuring adequate dispersion of the SiHCl₃ into the Zn melt. A Si loss by entrainment of less than 15% of the total Si input to the process is considered as acceptable.

In a second advantageous embodiment according to the invention, the Si-bearing alloy is allowed to cool down to a temperature somewhat above the melting point of the Zn, e.g. 600 °C. A major part of the initially dissolved Si crystallizes upon cooling, and accumulates together with any solid Si that was already present in the bath, in an upper solid fraction. The lower liquid fraction of the metal phase is Si-depleted, and can be separated by any suitable means, e.g. by pouring. This metal can be directly re-used for further SiHCl₃ reduction. The upper Si-rich fraction is then subjected to the purification as mentioned above, with the advantage that the amount of Zn to be evaporated is considerably reduced.

Both of the above first and second advantageous embodiments can of course be combined.

When the purification step is performed above the melting point of Si, the molten silicon can be solidified in a single step, chosen from the methods of crystal pulling such as the Czochralski method, directional solidification and ribbon growth. The ribbon growth method includes its variants, such as ribbon-growth-on-substrate (RGS), which directly yields RGS Si wafers.

Alternatively, the molten silicon can be granulated, the granules being fed to a melting furnace, preferably in a continuous way, whereupon the molten silicon can be solidified in a single step, chosen from the methods of crystal pulling, directional solidification and ribbon growth.

The solid material obtained can then be further processed to solar cells, directly or after wafering, according to the solidification method used.

The Zn, together with typical trace impurities such as Tl, Cd and Pb can be separated from the Si-bearing alloy by vaporisation. Si with a purity of 5N to 6N is then obtained. For this operation, the temperature is increased above the boiling point of Zn (907 °C), and preferably above the melting point (1414 °C) but below the boiling point of Si (2355 °C). It is useful to work at reduced pressure or vacuum. The Zn and its volatile impurities are hereby eliminated from the alloy, leaving molten Si. Only the non-volatile impurities present in the Zn remain in the Si. Examples of such impurities are Fe and Cu. Their concentration can be minimised, either by pre-distilling the Zn, by repeatedly recycling the Zn to the SiHCl₃ reduction step after electrolysis of the formed ZnCl₂, or by minimising the amount of Zn that needs to be vaporised per kg of Si in the purification step. In such optimised conditions, a Si purity exceeding 6N could be achieved.

A further advantage of the invention is that the Si can be recovered in the molten state at the end of the purification process. Indeed, in the state-of the art Siemens process and its variants, the Si is produced as a solid that has to be re-melted to be fashioned into wafers by any of the commonly used technologies (crystal pulling or directional solidification). Directly obtaining the Si in the molten state allows for a better integration of the feedstock production with the steps towards wafer production, providing an additional reduction in the total energy consumption of the process as well as in the cost of the wafer manufacturing. The liquid Si can indeed be fed directly to an ingot caster or a crystal puller. Processing the Si in a ribbon growth apparatus is also possible.

If one does not wish to produce rcady-to-wafer material, but only intermediate solid feedstock, it appears advantageous to granulate the purified Si. The obtained granules are easier to handle and to dose than the chunks obtained in e.g. the Siemens-based processes. This is particularly important in the case of ribbon growth technologies- The production of free flowing granules enables the continuous feeding of a CZ furnace or a ribbon growth apparatus.

### Example 1

The following example illustrates the invention. 7180 g of metallic Zn is heated to 850 °C in a graphite reactor. The height of the bath is about 16 cm and its diameter is 9 cm. A Minipuls^{™} peristaltic pump is used to introduce SiHCl₃ in the reactor via a quartz tube. The immersed extremity of the tube is fitted with a porous plug made of quartz. The SiHCl₃, vaporises in the immersed section of the tube and is dispersed as a gas in the liquid Zn. The SiHCl₃ flow rate is ca. 250 g/h, and the total amount added is 3400 g. The flow rate corresponds to 0.66 kg/min per m² of bath surface. The ZnCl₂, which evaporates during the reaction, condenses in a graphite tube connected to the reactor and is collected in a separate vessel. Any un-reacted SiHCl₃ is collected in a wet scrubber connected to the ZnCl₂ vessel. A Zn-Si alloy, saturated in Si at the prevalent reactor temperature and containing additional solid particles of Si, is obtained. The total Si content of the mixture is 11%. It is sufficient to increase the amount of SiHCl₃ added, at the same flow rate of 250 g/h, to increase the amount of solid Si in the Zn-Si alloy. This Zn-Si alloy containing solid Si is heated to 1500 °C to evaporate the Zn, which is condensed and recovered. The Si is then allowed to cool down to room temperature; 627 g of Si is recovered.

The Si reaction yield is thus about 89%. The Si losses can be attributed to the entrainment of particles of Si with the escaping ZnCl₂ vapours, and to the incomplete reduction of SiHCl₃ into Si metal. Of the remaining Si, about 60 g is found in the ZnCl₂ and 7 g in the scrubber

### Example 2

This example illustrates the granulation of the molten Si, a process which is particularly useful when the purification step is performed above the melting point of Si. One kg of molten Si is contained in a furnace at 1520 °C. The crucible containing the molten metal is under inert atmosphere (Ar). The furnace allows the crucible to be tilted. The molten Si is poured over a period of 3 minutes into a vessel containing 100 1 of ultra-pure water at room temperature, under agitation. The Si readily forms granules of a size between 2 and 10 mm.

## Claims

1. Process for converting SiHCl₃ into Si metal, comprising the steps of:
- contacting gaseous SiHCl₃ with a liquid metal phase containing Zn, thereby obtaining a Si-bearing metal phase, ZnCl₂ and H₂;
- separating H₂ and the ZnCl₂ from the Si-bearing metal phase; and
- purifying the Si-bearing metal phase at a temperature above the boiling point of Zn, thereby vaporising 7n and obtaining Si metal,
**characterised in that** the contacting and the separation steps are performed in a single reactor.

2. Process according to claim 1, wherein the contacting and the separating steps are performed simultaneously, by operating them at a temperature above the boiling point of ZnCl₂, which evaporates.

3. Process according to claims 1 or 2, wherein the Si-bearing metal phase that is obtained in the contacting step, contains at least part of the Si in the solid state.

4. Process according to any of claims 1 to 3, wherein a cooling step of the Si-bc;aring metal phase, preferably to a temperature of between 420 and 600 °C, is inserted before the purification step, thereby converting at least part of the Si present as a solute in the Si-bearing metal phase that is obtained in the contacting step, to the solid state.

5. Process according to claims 3 or 4, whereby the Si present in the solid state is separated, forming the Si-bearing metal phase that is further processed in the purification step.

6. Process according to claims 1 to 5, wherein the contacting step is performed by injecting SiHCl₃ into a bath comprising molten Zn, at a flow rate adapted to limit the loss of Si by entrainment with evaporating ZnCl₂ to less than 15%.

7. Process according to claim 6, whereby the flow rate of SiHCl₃ is lower than 0.8 kg/min per m² of bath surface.

8. Process according to any one of claims 1 to 7, whereby the purification step is performed at a temperature above the melting point of Si, thereby forming purified liquid Si.

9. Process according to claim 8, whereby the purification step is performed at reduced pressure or under vacuum.

10. Process according to any one of claims 1 to 9, further comprising the steps of:
- subjecting the separated ZnCl₂ to molten salt electrolysis, thereby recovering Zn and Cl₂;
- recycling the Zn to the SiHCl₃ contacting step;
- recycling the H₂ and the Cl₂ to a reactor for the production of HCl;
- hydrochlorination of an impure silicon source with HCl for the production of SiHCl₃.

11. Process according to any one of claims 1 to 10, wherein the Zn that is vaporised in the purification step, is condensed and recycled to the SiHCl₃ contacting step.

12. Process according to any one of claims 1 to 11, wherein the fraction of SiHCl₃ that exits the contacting step un-reacted, is recycled to the SiHCl₃ contacting step.

13. Process according to claims 8 or 9, comprising a single solidification step of the purified liquid Si, using a method chosen from the group of crystal pulling, directional solidification, and ribbon growth.

14. Process according to claims 8 or 9, comprising the granulation of the purified liquid Si.

15. Process according to claim 14, comprising the steps of :
- feeding the granules to a melting furnace; and
- applying a single solidification step, using a method chosen from the group of crystal pulling, directional solidification, and ribbon growth.

16. Process according to claims 13 or 15, whereby the solid material is wafered and further processed to solar cells.

## Amended claims

### Amended claims in accordance with Rule 137(2) EPC.

**1.** Process for converting SiHCl₃ into Si metal, comprising the steps of:
- contacting gaseous SiHCl₃ through an injection tube with a liquid metal phase containing Zn, whereby the end of the injection tube is provided with a dispersion device, and thereby obtaining a Si-bearing metal phase, ZnCl₂ and H₂; contacting gaseous SiCl₄ with a liquid metal phase containing Zn, thereby obtaining a Si-bearing metal phase and Zn-chloride;
- separating H₂ and the ZnCl₂ from the Si-bearing metal phase; and
- purifying the Si-bearing metal phase at a temperature above the boiling point of Zn, thereby vaporising Zn and obtaining Si metal,
**characterised in that** the contacting and the separation steps are performed in a single reactor.

**2.** Process according to claim 1, wherein the contacting and the separating steps are performed simultaneously, by operating them at a temperature above the boiling point of ZnCl₂, which evaporates.

**3.** Process according to claims 1 or 2, wherein the Si-bearing metal phase that is obtained in the contacting step, contains at least part of the Si in the solid state.

**4.** Process according to any of claims 1 to 3, wherein a cooling step of the Si-bearing metal phase, preferably to a temperature of between 420 and 600 °C, is inserted before the purification step, thereby converting at least part of the Si present as a solute in the Si-bearing metal phase that is obtained in the contacting step, to the solid state.

**5.** Process according to claims 3 or 4, whereby the Si present in the solid state is separated, forming the Si-bearing metal phase that is further processed in the purification step.

**6.** Process according to claims 1 to 5, wherein the contacting step is performed by injecting SiHCl₃ into a bath comprising molten Zn, at a flow rate adapted to limit the loss of Si by entrainment with evaporating ZnCl₂ to less than 15%.

**7.** Process according to claim 6, whereby the flow rate of SiHCl₃ is lower than 0.8 kg/min per m² of bath surface.

**8.** Process according to any one of claims 1 to 7, whereby the purification step is performed at a temperature above the melting point of Si, thereby forming purified liquid Si.

**9.** Process according to claim 8, whereby the purification step is performed at reduced pressure or under vacuum.

**10.** Process according to any one of claims 1 to 9, further comprising the steps of:
- subjecting the separated ZnCl₂ to molten salt electrolysis, thereby recovering Zn and Cl₂;
- recycling the Zn to the SiHCl₃ contacting step;
- recycling the H₂ and the Cl₂ to a reactor for the production of HCl;
- hydrochlorination of an impure silicon source with HCl for the production of SiHCl₃.

**11.** Process according to any one of claims 1 to 10, wherein the Zn that is vaporised in the purification step, is condensed and recycled to the SiHCl₃ contacting step.

**12.** Process according to any one of claims 1 to 11, wherein the fraction of SiHCl₃ that exits the contacting step un-reacted, is recycled to the SiHCl₃ contacting step.

**13.** Process according to claims 8 or 9, comprising a single solidification step of the purified liquid Si, using a method chosen from the group of crystal pulling, directional solidification, and ribbon growth.

**14.** Process according to claims 8 or 9, comprising the granulation of the purified liquid Si.

**15.** Process according to claim 14, comprising the steps of:
- feeding the granules to a melting furnace; and
- applying a single solidification step, using a method chosen from the group of crystal pulling, directional solidification, and ribbon growth.

**16.** Process according to claims 13 or 15, whereby the solid material is wafered and further processed to solar cells.
